(19) **Europäisches Patentamt**
**European Patent Office**
**Office européen des brevets**

(11) **EP 2 145 675 A1**

(12) **EUROPEAN PATENT APPLICATION**
published in accordance with Art. 153(4) EPC

(43) Date of publication:
**20.01.2010 Bulletin 2010/03**

(51) Int Cl.:
*B01D 71/34* *(2006.01)*    *B01D 69/08* *(2006.01)*
*D01F 6/12* *(2006.01)*

(21) Application number: **08722593.4**

(22) Date of filing: **21.03.2008**

(86) International application number:
**PCT/JP2008/055229**

(87) International publication number:
**WO 2008/117740 (02.10.2008 Gazette 2008/40)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.03.2007 JP 2007076539**

(71) Applicant: **Kureha Corporation**
**Chuo-ku**
**Tokyo 103-8552 (JP)**

(72) Inventors:
• **Yasuhiro TADA**
**Ibaraki-ken 311-3436 (JP)**
• **Takeo TAKAHASHI**
**Ibaraki-ken 311-3436 (JP)**
• **Toshiya MIZUNO**
**Ibaraki-ken 300-0031 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **VINYLIDENE FLUORIDE RESIN HOLLOW-FIBER POROUS MEMBRANE AND PROCESS FOR PRODUCTION OF THE SAME**

(57)    A hollow-fiber porous membrane, comprising a hollow fiber-form porous membrane of vinylidene fluoride resin providing: a ratio F (L = 200 mm, v = 70 %)/$Pm^4$ of at least $7 \times 10^5$ (m/day · $\mu m^4$), wherein the ratio F (L = 200 mm, v = 70 %)/$Pm^4$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water temperature of 25°C and a 4-th order value $Pm^4$ of an average pore size Pm. The hollow-fiber porous membrane has an average pore size smaller than before leading to an improved ability of removing fine particles, while suppressing the lowering in water permeability. The hollow-fiber porous membrane is produced by melt-extrusion and low-temperature cooling of a starting composition including a resin material containing an ultra-high molecular weight resin component in a larger amount than before, and increased amounts of plasticizer and good solvent.

EP 2 145 675 A1

**Description**

TECHNICAL FIELD

The present invention relates to a hollow-fiber porous membrane (hollow fiber-form porous membrane) of vinylidene fluoride resin excellent in water (filtration) treatment performances, particularly a hollow-fiber porous membrane of vinylidene fluoride resin having a smaller pore size and a relatively large water permeation rate compared with conventional ones, and a process for production thereof.

BACKGROUND ART

Vinylidene fluoride resin is excellent in chemical resistance, heat resistance and mechanical strength and, therefore, has been studied with respect to application thereof to porous membranes for separation. In the case of use for water (filtration) treatment, particularly for production of potable water or sewage treatment, a hollow fiber-form porous membrane is frequently used because it can easily provide a large membrane area per unit volume of filtration apparatus, and many proposals have been made including processes for production thereof (e.g., Patent documents 1 - 3 listed below).

Also, the present inventors, et al., have found that a process of melt-extruding a vinylidene fluoride resin having a specific molecular weight characteristic together with a plasticizer and a good solvent for the vinylidene fluoride resin into a hollow fiber-form and then removing the plasticizer by extraction to render the hollow fiber porous is effective for formation of a porous membrane of vinylidene fluoride resin having minute pores of appropriate size and distribution and also excellent in mechanical strength, and have made a series of proposals (Patent document 4 listed below, etc.). However, a strong demand exists for further improvements of overall performances including filtration performances and mechanical performances of the hollow-fiber porous membrane necessary for use as a filtration membrane. It is particularly desired to have pores having appropriate sizes for removing particles to be removed and also a large water permeation rate (filtration performance).

For example, most hollow-fiber porous membranes of vinylidene fluoride resin developed heretofore are those having average pore sizes (based on a half-dry/bubble point method (ASTM-F316 and ASTM-E1294, the same as hereinafter) over 0.1 $\mu$m belonging to MF (microfiltration) membranes, and it is desired to decrease the pore size to one falling within the range of UF (ultra-filtration) membranes having smaller pore sizes so as to ensure the removal of bacteria of which the sizes range to 0.1$\mu$m as the lower limit. However, there is a problem that the decrease of a water permeation rate is inevitable in forming membranes of a smaller pore size as is clear from the Hagen Poiseuille formula showing that the water permeation rate which passes through a pore or a conduit is proportional to the fourth power of the pore size.

The present inventors, et al. have found it possible to provide a hollow-fiber porous membrane of vinylidene fluoride resin having a large water permeation rate regardless of a relatively small average pore size by increasing the amount of good solvent in the composition to be melt- extruded in the process of the above-mentioned Patent document 4, and have made a proposal (Patent document 5). However, the restriction of the fourth power rule with respect to a pore size was severe, and the average pore size realized while maintaining a practical water permeation rate was a level still exceeding 0.08 $\mu$m.

> Patent document 1: JP-A 63-296939
> Patent document 2: WO02 / 070115A
> Patent document 3: JP-A 2003-210954
> Patent document 4: WO2004/081109Aa
> Patent document 5: WO2007/010832A1.

DISCLOSURE OF INVENTION

Accordingly, a principal object of the present invention is to provide a hollow-fiber porous membrane of vinylidene fluoride resin having smaller pore sizes than before and yet suffering from little decrease in water permeation rate, and a process for production thereof.

The hollow-fiber porous membrane of vinylidene fluoride resin of the present invention has been develop for accomplishing the above-mentioned object, and more specifically comprises: a hollow fiber-form porous membrane of vinylidene fluoride resin providing a ratio F (L = 200 mm, v = 70 %)/Pm$^4$ of at least $7\times10^5$ (m/day $\cdot$ $\mu$m$^4$), wherein the ratio F (L = 200 mm, v = 70 %)/Pm$^4$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water temperature of 25°C and a 4-th order value Pm$^4$ of an

average pore size Pm.

In the above, F (L= 200 mm, v= 70%) (m/day) is a parameter showing a water permeability obtained by normalizing the water permeation rate which generally changes with a porosity at a porosity of 70 %, and F(L= 200-mm, v= 70%)/Pm$^4$ is a parameter showing a prevention of decrease in water permeability resisting the fourth power rule of the Hagen Poiseuille formula. Compared with the parameter of Patent document 5 using a value of Pm$^2$ in order to take into account an increase or decrease in plane of pores for evaluation of communicativeness of the pores, the value of Pm$^4$ is used in the present invention thinking more of a smaller pore size. Incidentally, Comparative Example 1 corresponding to a typical Example in Patent document 5 provided a value of F(L= 200-mm, v= 70%)/Pm$^4$ as described above of $2.4 \times 10^5$ (m/day $\cdot$ $\mu$m$^4$).

A history through which the present inventors arrived at the present invention starting from the above-mentioned Patent document 5, is briefly described. In the process of Patent document 5 using an increased amount of good solvent in a melt-extrusion composition, it has been known per se that a lowering in temperature of cooling fluid is effective to some extent in order to reduce the pore size. In this case, however, the water permeation rate is also lowered and the object of the present invention cannot be attained (after-mentioned Comparative Example 4). This is understood as follows. A hollow-fiber porous-membrane forming process including a sequence of cooling from outside of a hollow-fiber-form extrudate and plasticizer extraction including those disclosed in Patent documents 4 and 5, generally provides a gradient-network-texture membrane which has a dense layer or a fine-texture layer (hereinafter called a dense layer or a filtration layer), which generally governs filtration performance on the outer surface side, and a sparse resin layer (a supporting layer) contributing to reinforcement of the membrane on the inner-surface side. However, when only the cooling liquid temperature is lowered as mentioned above, an increase of the dense layer thickness is caused and, simultaneously with the reduction of the dense layer pore size, the decrease of a water permeation rate is caused. While the increase in amount of good solvent in the process of Patent document 5 has an effect of removing a sub-peak on the large pore size side which is disadvantageous from the view point of fractionation performance and also an effect of increasing the water permeation rate as originally intended, a further increase in amount of good solvent results in not a further remarkable improvement in the effects but results in a lowering of porosity (Comparative Examples 5-6 described later) until resulting in collapse of the hollow fiber extrudate due to lowering in viscosity of the melt-extrudate in a cooling bath (Comparative Example 7 described later).

As a result of study including consideration of the influence of the increase in amount of good solvent on the film morphology under a lower cooling liquid temperature for the purpose of producing a vinylidene-fluoride-resin porous membrane having a pore size smaller than before and a relatively large water permeation rate, the present inventors have found that the increased amount of good solvent has a function of alleviating the thickness increase of the dense layer, and also a function of improving the communicativeness of the pores even at a low stretching ratio or a low porosity level.

Then, the present inventors wholly reviewed the melt- extrusion materials including a starting vinylidene fluoride resin and the melt-extrusion and cooling conditions. As a result, it has been found possible to produce a small-pore-size hollow-fiber porous membrane of vinylidene fluoride resin by increasing the amount of an ultrahigh molecular weight component which has been used heretofore in a relatively small amount as a component for improving the crystallization characteristics of the vinylidene fluoride resin, to utilize its effects of increasing the viscosity of and reinforcing the melt-extrudate, thereby allowing a stable extrusion at an increased amount of good solvent and use of an increased amount of plasticizer leading to an increased porosity, while preventing thickening of the dense layer under a low-temperature cooling condition.

The hollow-fiber porous membrane of vinylidene fluoride resin of the present invention is based on the above-mentioned finding. Therefore, according to another aspect of the present invention, there is provided a process for producing the above-mentioned hollow-fiber porous membrane, comprising:

providing a vinylidene fluoride resin mixture comprising 90 - 20 wt. % of medium-to-high-molecular-weight vinylidene fluoride resin having a weight-average molecular weight of 150,000-600,000 and 10 - 80 wt.% of ultra- high molecular weight vinylidene fluoride resin having a weight-average molecular weight which is at most 1,200,000 and at least 1.8 times that of the medium-to-high-molecular-weight vinylidene fluoride resin,

providing a composition by adding, to 100 wt. parts of the vinylidene fluoride resin mixture, a plasticizer and a good solvent for vinylidene fluoride resin in a total amount of 100 - 300 wt. parts including 25 - 45 wt.% thereof of the good solvent,

melt extruding the composition into a hollow-fiber film,

introducing the hollow-fiber film into a cooling liquid at -20 - 40 °C to cool and solidify the film, and

extracting the plasticizer from the hollow-fiber film to recover a hollow-fiber porous membrane.

BRIEF DESCRIPTION OF THE DRAWINGS

Fig. 1 is a schematic illustration of a water-permeability measuring apparatus for evaluating water treatment performance of hollow-fiber porous membranes obtained in Examples and Comparative Examples.

Fig. 2 is a plot which shows change of porosity versus change of stretching ratio at the time of changing a stretching ratio in Example 7 and Comparative Example 3 described later.

Fig. 3 is a plot which shows change of normalized water permeation rate versus change of porosity corresponding to Fig.2.

BEST MODE FOR PRACTICING THE INVENTION

Hereafter, the hollow-fiber porous membrane of vinylidene fluoride resin of the present invention will be described in the order of the production process of the present invention which is a preferred production process for production thereof.

The vinylidene fluoride resin used as a principal starting material of the membrane in the present invention may be homopolymer of vinylidene fluoride, i.e., polyvinylidene fluoride, or a copolymer of vinylidene fluoride together with a monomer copolymerizable with vinylidene fluoride, or a mixture of these. Examples of the monomer copolymerizable with vinylidene fluoride may include: tetrafluoroethylene, hexafluoropropylene, trifluoroethylene, chlorotrifluoroethylene and vinylidene fluoride, which may be used singly or in two or more species. The vinylidene fluoride resin may preferably comprise at least 70 mol% of vinylidene fluoride as the constituent unit. Among these, it is preferred to use homopolymer consisting of 100 mol% of vinylidene fluoride in view of its high mechanical strength.

The present invention uses, as a starting material, a mixture of 90 - 20 wt. %, preferably 85 - 40 wt. %, more preferably 80 - 60 wt. % of a medium-to-high-molecular-weight vinylidene fluoride resin having a weight-average molecular weight of 150,000-600,000, and 10 - 80 wt. %, preferably 15 - 60 wt. %, more preferably 20 - 40 wt. % of an ultra-high molecular weight vinylidene fluoride resin having a weight-average molecular weight which is at most 1,200,000 and at least 1.8 times that of the medium-to-high-molecular-weight vinylidene fluoride resin, which are both selected from the above-mentioned class of vinylidene fluoride resins. Of these, the medium-to-high molecular-weight component functions as a so-called matrix resin for keeping a high molecular weight level as a whole of the vinylidene fluoride resin and providing a hollow-fiber porous membrane with excellent strength and water permeability. On the other hand, the ultrahigh molecular weight component, combined with the above-mentioned medium-to-high molecular-weight component, raises the crystallization temperature Tc of the melt- extruded resin and raises the viscosity of the melt-extrusion composition to reinforce it, thereby allowing stable extrusion in the hollow-fiber form, in spite of high plasticizer and good solvent contents. By raising Tc, on the occasion of the preferential cooling from the outer surface of the hollow fiber film formed by the melt- extrusion, it becomes possible to accelerate the solidification of the vinylidene fluoride resin from the inside to the inner surface of which the solidification is liable to be retarded compared with the outer film surface, so that growth of spherical particles can be suppressed. Tc is preferably at least 143°C, further preferably at least 145°C. Generally, Tc of the vinylidene fluoride resin used does not substantially change in the production process of a hollow fiber. Therefore, it can be measured by using a product hollow-fiber porous membrane as a sample according to the DSC method described later.

If the Mw of the ultra-high molecular weight vinylidene fluoride resin is less than 1.8 times the Mw of the medium-to-high molecular weight resin, it becomes difficult to fully suppress the formation of spherical particle texture, and if the Mw exceeds 1,200,000 on the other hand, it becomes difficult to uniformly disperse it in the matrix resin.

Both vinylidene fluoride resins of a medium-to-high molecular weight and an ultra- high molecular weight as described above, may preferably be obtained by emulsion polymerization or suspension polymerization, particularly preferably by suspension polymerization.

Moreover, if the addition amount of the ultra-high molecular weight vinylidene fluoride resin is less than 10 wt. %, the effect of viscosity-increasing and reinforcing the melt-extrusion composition is not sufficient, and in excess of 80 wt. %, there result in increased tendencies such that the texture of phase separation between the vinylidene fluoride resin and the plasticizer becomes excessively fine to result in a porous membrane exhibiting a lower water permeation rate when used as a microfiltration membrane, and the stable film or membrane formation becomes difficult due to melt fracture during the processing.

In a preferred embodiment of the present invention, a plasticizer and a good solvent for vinylidene fluoride resin are added to the above-mentioned vinylidene fluoride resin, to form a starting composition for formation of the membrane.

(Plasticizer)

The hollow-fiber porous membrane of the present invention is principally formed of the above-mentioned vinylidene fluoride resin, but for the production thereof, it is preferred to use at least a plasticizer for vinylidene fluoride resin as a pore-forming agent in addition to the vinylidene fluoride resin. As the plasticizer, aliphatic polyesters of a dibasic acid and a glycol may generally be used. Examples thereof may include: adipic acid-based polyesters of, e.g., the adipic acid-propylene glycol type, and the adipic acid-1, 3-butylene glycol type; sebacic acid-based polyesters of, e.g., the sebacic acid-propylene glycol type; and azelaic acid-based polyesters of, e.g., the azelaic acid-propylene glycol type, and azelaic acid-1, 3-butylene glycol type.

(Good solvent)

Further, in order to form the hollow-fiber membrane of the present invention while preventing the thickening of a dense layer during low-temperature cooling and through melt extrusion at a relatively low viscosity, it is preferred to use a good solvent for vinylidene fluoride resin in addition to the above-mentioned plasticizer. As the good solvent, those capable of dissolving vinylidene fluoride resin in a temperature range of 20 - 250°C may be used. Examples thereof may include: N-methyl- pyrrolidone, dimethylformamide, dimethylacetamide, dimethyl sulfoxide, methyl ethyl ketone, acetone, tetrehydrofuran, dioxane, ethyl acetate, propylene carbonate, cyclohexane, methyl isobutyl ketone, dimethyl phthalate, and solvent mixtures of these. N-methylpyrrolidone (NMP) is particularly preferred in view of its stability at high temperatures.

(Composition)

The starting composition for formation of the hollow-fiber membrane may preferably be obtained by mixing 100 wt. parts of the vinylidene fluoride resin with the plasticizer and the good solvent for vinylidene fluoride resin in a total amount of 100 - 300 wt. parts, more preferably 180 - 250 wt. parts, including 25 - 45 wt.% thereof, more preferably 30 - 40 wt.% thereof, of the good solvent.

If the total amount of the plasticizer and the good solvent is too small, it becomes impossible to obtain the hollow-fiber porous membrane of the present invention characterized by a large water permeability at a small pore size, and if too large, the viscosity is excessively lowered to make it difficult to provide a porous hollow-fiber having a uniformly and appropriately high porosity, and therefore corresponding filtration performance (water permeability). Further, if the proportion of the good solvent in the total amount of the both components is below 25 wt.%, it becomes difficult to attain the characteristic effect of the present invention of preventing the thickening of the dense layer during low-temperature cooling. On the other hand, if the proportion of the good solvent exceeds 45 wt.%, the crystallization of the resin in the cooling bath becomes insufficient, thus being liable to cause the collapse of the hollow-fiber, so that the formation of the hollow-fiber per se becomes difficult. For similar reasons, it is preferred that the good solvent is used in a proportion of 55 - 90 wt. %, particularly 65 - 75 wt. %, with respect to the vinylidene fluoride resin in the composition.

(Mixing and Melt-extrusion)

The melt-extrusion composition at a barrel temperature of 180 - 250°C, preferably 200 -240°C, may be extruded into a hollow-fiber film by extrusion through an annular nozzle at a temperature of generally 140 - 270°C, preferably 150 - 200°C. Accordingly, the manners of mixing and melting of the vinylidene fluoride resin, plasticizer and good solvent are arbitrary as far as a uniform mixture in the above-mentioned temperature range can be obtained consequently. According to a preferred embodiment for obtaining such a composition, a twin-screw kneading extruder is used, and the vinylidene fluoride resin (preferably in a mixture of a principal resin and a crystallinity-modifier resin) is supplied from an upstream side of the extruder and a mixture of the plasticizer and the good solvent is supplied at a downstream position to be formed into a uniform mixture until they pass through the extruder and are discharged. The twin-screw extruder may be provided with a plurality of blocks capable of independent temperature control along its longitudinal axis so as to allow appropriate temperature control at respective positions depending on the contents of the materials passing therethrough.

(Cooling)

Then, the melt-extruded hollow fiber film is cooled preferentially from an outside thereof and solidified by introducing it into a cooling liquid bath at -20 - 40 °C, preferably 0 - 30 °C, more preferably 5 - 25°C. In this instance, if the hollow-fiber film is cooled while an inert gas, such as air or nitrogen, is injected into the hollow part thereof, a hollow-fiber film having an enlarged diameter can be obtained. This is advantageous for obtaining a hollow-fiber porous membrane which is less liable to cause a lowering in water permeation rate per unit area of the membrane even at an increased length of the hollow-fiber membrane (WO2005/03700A). At a cooling bath temperature below - 20 °C, the solidified hollow fiber becomes brittle to make the drawing difficult. Below 5 °C, moisture in the atmosphere is liable to cause dew or frost, thus resulting in a difficulty of requiring a complex apparatus. On the other hand, in excess of 40 °C, it becomes difficult to form a hollow-fiber porous membrane of a small pore size aimed at by the present invention.

In order to prevent the collapse of a melt-extruded hollow-fiber film containing a large amount of good solvent functioning to suppress the crystallization of vinylidene fluoride resin according to the present invention, it is preferred to take a longer time than before as a time after the melt-extrusion and before entering the cooling bath (i.e., an air gap passage time = air gap/melt-extrudate take-up speed), which is preferably at least 1.0 sec., particularly 2.0 -10.0 sec.

As the cooling liquid, a liquid which is inert (i.e., showing non-solvency and non-reactivity) with respect to vinylidene fluoride resin, is generally used, and preferably water is used. In some case, a good solvent for vinylidene fluoride resin (similar to those used in the above-mentioned melt-extrusion composition) which is miscible with the cooling liquid (preferably, NMP miscible with water) can be mixed at a proportion of 30 - 90 wt.%, preferably 40 - 80 wt.%, of the cooling liquid, so as to enlarge the pore size at the outer surface of the resultant hollow-fiber porous membrane, whereby it becomes possible to obtain a hollow-fiber porous membrane having a layer of minimum pore size inside the membrane, which is advantageous for regeneration by air scrubbing (WO2006/087963A).

(Extraction)

The cooled and solidified hollow fiber film is then introduced into an extraction liquid bath to remove the plasticizer and the good solvent therefrom, thereby forming a hollow fiber membrane. The extraction liquid is not particularly restricted provided that it does not dissolve the vinylidene fluoride resin while dissolving the plasticizer and the good solvent. Suitable examples thereof may include: polar solvents having a boiling point on the order of 30 - 100°C, inclusive of alcohols, such as methanol and isopropyl alcohol, and chlorinated hydrocarbons, such as dichloromethane and 1,1,1-trichloroethane.

(Stretching)

The hollow-fiber film or membrane after the extraction may preferably be subjected to stretching in order to increase the porosity and pore size and improve the strength-elongation characteristic thereof. The stretching may preferably be effected as a uniaxial stretching in the longitudinal direction of the hollow-fiber membrane by means of, e.g., a pair of rollers rotating at different circumferential speeds. This is because it has been found that a microscopic texture including a stretched fibril portion and a non-stretched node portion appearing alternately in the stretched direction is preferred for the hollow-fiber porous membrane of vinylidene fluoride resin of the present invention to exhibit a harmony of porosity and strength-elongation characteristic thereof. The stretching ratio may suitably be on the order of 1.1 - 2.0 times, particularly 1.2 - 1.7 times. If the stretching ratio is excessively large, the hollow-fiber membrane can be broken at a high liability. The stretching temperature may preferably be 25 - 90°C, particularly 45 - 80°C. At too low a stretching temperature, the stretching becomes nonuniform, thus being liable to cause the breakage of the hollow-fiber membrane. On the other hand, at an excessively high temperature, enlargement of pore sizes cannot be attained even at an increased stretching ratio, so that it becomes difficult to attain an increased water permeation rate. It is preferred to heat-treat the hollow-fiber film or membrane for 1 sec. - 18000 sec., preferably 3 sec. - 3600 sec., in a temperature range of 80 - 160°C, preferably 100 - 140°C, to increase the crystallinity in advance of the stretching for the purpose of improving the stretchability.

(Relaxation treatment)

The hollow-fiber porous membrane of vinylidene fluoride resin obtained through the above-mentioned steps may preferably be subjected to at least one stage, preferably at least two stages, of relaxation or fixed length heat treatment in a non-wetting environment (or medium). The non-wetting environment may be formed of non-wetting liquids having a surface tension (JIS K6768) larger than a wet tension of vinylidene fluoride resin, typically water, or almost all gases including air as a representative. The relaxation may be effected by passing a hollow-fiber porous membrane stretched in advance through the above-mentioned non-wetting, preferably heated environment disposed between an upstream roller and a downstream roller rotating at successively decreasing circumferential speeds. The relaxation percentage determined by (1 - (the downstream roller circumferential speed/the upstream roller circumferential speed)) × 100 (%) may preferably be totally 0% (fixed-length heat treatment) to 50 %, particularly 1 - 50 % of relaxation heat treatment. A relaxation percentage exceeding 50 % is difficult to realize or, even if possible, can only result in a saturation or even a decrease of the effect of increasing the water permeation rate, while it may somewhat depend on the stretching ratio in the previous step, so that it is not desirable.

The first stage relaxation temperature may preferably be 0 - 100 °C, particularly 50 - 100 °C. The relaxation treatment time may be either short or long as far as a desired relaxation percentage can be accomplished. It is generally on the order of from 5 second to 1 minute but need not be within this range.

A latter stage relaxation treatment temperature may preferably be 80 - 170 °C, particularly 120 - 160 °C, so as to obtain a relaxation percentage of 1 - 20 %.

The effect of the above-mentioned relaxation treatment is an increase in water permeation rate of the resultant hollow-fiber porous membrane, while substantially retaining a sharp pore size distribution. If the above-mentioned treatment is performed at a fixed length, it becomes a heat-setting after stretching.

(Hollow-fiber porous membrane of vinylidene fluoride resin)

The hollow-fiber porous membrane of vinylidene fluoride resin according to the present invention obtained through the above-mentioned series of steps is characterized by: a ratio F (L = 200 mm, v = 70 %)/$Pm^4$ of at least $7\times10^5$ (m/day · $\mu m^4$), preferably at least $12\times10^5$ (m/day · $\mu m^4$), most preferably at least $20\times10^5$ (m/day · $\mu m^4$),wherein the ratio F (L = 200 mm, v = 70 %)/$Pm^4$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water temperature of 25°C and a 4-th order value $Pm^4$ of an average pore size Pm. This means that the hollow-fiber porous membrane of the present invention retain a high level of water permeability regardless of a small pore size. The water permeation rate normalized at a porosity of 70 % (of which the measure method will be described later) is used in order to effect performance evaluation of a hollow-fiber porous membrane based on an average pore size and a water permeation rate alone by removing the influence of a porosity on the water permeation rate. Now, a measurement method adopted in the present invention for evaluating the above characteristic will be described.

The bubble point/half dry method is a method or methods according to ASTM · F316-86 and ASTM · E1294-89 for measuring a maximum pore size Pmax and a pore size distribution of a porous membrane, particularly suited for a hollow-fiber porous membrane. More specifically, according to the bubble point method, a compressed air is supplied into a sample hollow-fiber porous membrane soaked in a test liquid at gradually increasing pressures to determine an air pressure at which a first bubble is generated in the test liquid, and a maximum pore size Pmax ($\mu$m) of the sample membrane is calculated from the air pressure. According to the half dry method, an air pressure is determined for a sample hollow-fiber porous membrane at an intersection of a wet flow curve as a flow curve obtained in the state of the sample membrane being wetted with the test liquid and a half dry curve which is defined as a line having a slope of half inclination with respect to a dry flow curve measured in a dry state of the sample membrane, and an average pore size Pm ($\mu$m) is calculated from the air pressure. These values described herein are based on values measured by using "PALM POROMTER CFP-2000AEX" made by Porous Materials, Inc., as a measuring instrument and perfluoropolyester (trade name: "GALWICK") as a test liquid. Hollow-fiber membranes having a test length of ca. 10 mm are ordinarily used as samples.

According to the above-mentioned process for producing the hollow-fiber porous membrane of the present invention, a product having an average pore size Pm of generally at most 2$\mu$m may be obtained, but the present invention particularly aims at providing an average pore size of at most 0.08 $\mu$m, particularly 0.03 -0.08$\mu$m, preferably 0.04 -0.08$\mu$m, further preferably 0.05 -0.07$\mu$m. At an average pore size Pm below 0.03$\mu$m, the lowering in water permeation rate of the membrane cannot be ignored, and in excess of 0.08$\mu$m on the other hand, the membrane is liable to suffer from a lowering in performance of removing minute particles (such as soling substances or bacteria, etc.), thus failing to satisfy the object of the present invention. The maximum pore size may be on the order of generally 0.05 -0.15$\mu$m, particularly preferably 0.07 -0.10$\mu$m,

The pore size distribution is desirably as narrow as possible, and may preferably provide a standard deviation thereof of at most 0.015$\mu$m, more preferably at most 0.010$\mu$m, particularly preferably at most 0.007pm.

Other general features of hollow-fiber porous membranes obtained according to the present invention may include: a porosity of 50 - 90 %, preferably 55 - 85 %, particularly preferably 55 - 70 %, most preferably 55 - 65 %; a tensile strength of at least 6 MPa; an elongation at break of at least 5 %. A ratio between outer surface pore size and inner surface pore size of preferably 2.0 - 10.0, more preferably 2.5 - 8.0, particularly preferably 3.0 - 7.0. Further, the thickness is ordinarily in the range of 5 - 800 $\mu$m, preferably 50 - 600 $\mu$m, particularly preferably 150 - 500 $\mu$m. The outer diameter of the hollow fiber may suitably be on the order of 0.3 - 3 mm, particularly ca. 1 - 3 mm.

It is also preferable to subject the hollow-fiber porous membrane obtained by the present invention to selective hydrophilization of an outer surface (preferably with respect to a thickness which is at least two times an average pore size on a water feed side outer surface and at most 1/2 of the membrane thickness) as disclosed in JP-A 2007- 313491 (of which the disclosure is intended to be incorporated by reference as needed) so as to alleviate the reduction with time in water permeation rate due to fouling of the membrane and plugging of pores with fouling substances in the feed water while retaining the membrane strength.

EXAMPLES

Hereinbelow, the present invention will be described more specifically based on Examples and Comparative Examples. The properties described herein including those described below except for the above-mentioned (Pm and Pmax) are based on measured values according to the following methods.

(Weight-average molecular weight (Mw))

A GPC apparatus ("GPC-900", made by Nippon Bunko K.K.) was used together with a column of "Shodex KD-806M" and a pre-column of "Shodex KD-G" (respectively made by Showa Denko K.K.), and measurement according to GPC (gel permeation chromatography) was performed by using NMP as the solvent at a flow rate of 10 ml/min. at a temperature of 40°C to measure polystyrene-based molecular weights.

(Crystallization temperature Tc)

A differential scanning calorimeter "DSC-7" (made by Perkin-Elmer Corp.) was used. A sample resin of 10 mg was set in a measurement cell, and in a nitrogen gas atmosphere, once heated from 30°C up to 250°C at a temperature-raising rate of 10°C/min., then held at 250°C for 1 min. and cooled from 250°C down to 30°C at a temperature-lowering rate of 10°C/min., thereby to obtain a DSC curve. On the DSC curve, an exothermic peak temperature in the course of cooling was determined as a crystallization temperature Tc(°C).

(Porosity)

The length and also the outer diameter and inner diameter of a sample hollow fiber porous membrane were measured to calculate an apparent volume V (cm$^3$) of the porous membrane, and the weight W (g) of the porous membrane was measured to calculate a porosity according to the following formula:

$$\text{Porosity (\%)} = (1 - W/(V \times \rho)) \times 100,$$

wherein ρ: density of PVDF (= 1.78 g/cm$^3$).

(Pore size distribution)

A pore size distribution and a maximum pore size were measured according to the half-dry/bubble point method (according to ASTM · F316-86 and ASTM · E1294-89) by using "PALM POROMETER CFP-2000AEX", made by Porous Materials, Inc. and, based on the measured pore size distribution, an average pore size Pm (μm) and a standard deviation SD (μm) were calculated according to formulae (1) and (2) shown below:

$$P_m = \frac{1}{n}(P_1 f_1 + P_2 f_2 + \cdots + P_k f_k) = \frac{1}{n}\sum_{i=1}^{k} P_i f_i \qquad \cdots\cdots(1)$$

$P_i$: diameter of individual pore, f : frequency, n : number of data

$$SD = \left(\frac{1}{n}\sum_{i=1}^{k} f_i (P_i - P_m)^2\right)^{1/2} = \left(\frac{1}{n}\sum_{i=1}^{k} f_i P_i^2 - P_m^2\right)^{1/2} \qquad \cdots\cdots(2)$$

Moreover, a ratio Pmax/Pm (-) between the maximum pore size Pmax and the average pore size Pm, was calculated.

(Outer-surface average pore size and Inner-surface average pore size)

An outer-surface average pore size and an inner-surface average pore size are measured by a SEM method (SEM-average pore size). First, an outer surface and an inner surface of a hollow-fiber porous membrane sample are respectively photographed through a SEM at a magnification of 5000. Then, on each photograph, a pore size of every recognizable pore is determined by measuring a longer diameter and a shorter diameter to calculate a pore size = (longer diameter + shorter diameter)/ 2 for each pore. The above measurement and calculation are continued until the number of pores reaches 100, and an arithmetic mean value of the 100 pore sizes is obtained as a SEM-average pore size.

(Water permeation rate or water permeability)

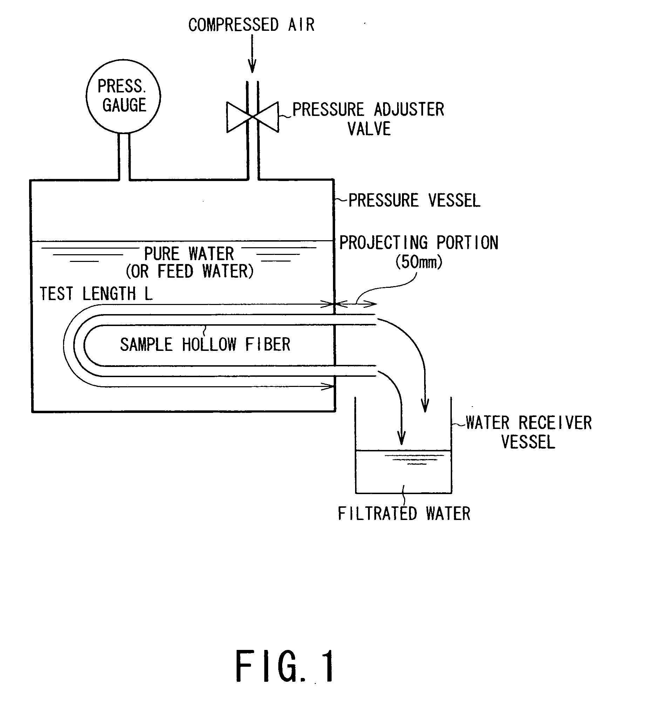

A sample hollow-fiber porous membrane having a test length L (as shown in Fig. 1) = 200 mm was immersed in ethanol for 15 min., then immersed in water to be hydrophilized, and then subjected to a measurement of water permeation rate per day ($m^3$/day) at a water temperature of 25°C and a pressure difference of 100 kPa, which was then divided by a membrane area of the hollow-fiber porous membrane ($m^2$) (= outer diameter $\times \pi \times$ test length L) to provide a water permeation rate. The resultant value is indicated, e.g., as F (100 kPa, L = 200 mm), in the unit of m/day (= $m^3/m^2$ · day).

Further, a water permeation rate F (100 kPa, L = 200 mm) measured at a test length L = 200 mm was normalized at a porosity v = 70 % to obtain F (L = 200 mm, v = 70 %) according to the following formula:

$$F\ (L = 200\ mm,\ v = 70\ \%)$$
$$= F\ (100\ kPa,\ L = 200\ mm) \times (70\ (\%)/v\ (\%)),$$

and a ratio thereof to the 4-th order of average pore size Pm of F (L = 200 mm, v = 70 %)/$Pm^4$ was obtained for evaluating a water permeability while taking capability of removing minute particles into consideration.

(Tensile test)

A tensile tester ("RTM-100", made by Toyo Baldwin K.K.) was used for measurement in the atmosphere of a temperature of 23 °C and 50% of relative humidity, under the conditions including an initial sample length of 100 mm and a crosshead speed of 200 mm/min.

(Example 1)

A medium-to-high molecular-weight vinylidene fluoride resin (PVDF) (powder) having a weight-average molecular weight (Mw) of $4.12 \times 10^5$ and an ultra- high molecular weight vinylidene fluoride resin (PVDF) (powder) having Mw = $9.36 \times 10^5$ were blended in proportions of 75 wt.% and 25 wt.%, respectively, by a Henschel mixer to obtain a PVDF mixture (Mixture A) having Mw = $5.43 \times 10^5$.

An adipic acid-based polyester plasticizer ("PN-150", made by Asahi Denka Kogyo K.K.) as an aliphatic polyester and N-methyl-pyrrolidone (NMP) as a solvent were mixed under stirring in a ratio of 68.6 wt.%/31.4 wt.% at room temperature to obtain a plasticizer-solvent mixture (Mixture B).

An equi-directional rotation and engagement-type twin-screw extruder ("BT-30", made by Plastic Kogaku Kenkyusyo K.K.; screw diameter: 30 mm, L/ D = 48) was used, and the PVDF mixture was supplied from a powder supply port at a position of 80 mm from the upstream end of the cylinder and the plasticizer-solvent mixture heated to 160°C was supplied from a liquid supply port at a position of 480 mm from the upstream end of the cylinder at a ratio of plasticizer-solvent mixture/ PVDF mixture = 225/100 (by weight), followed by kneading at a barrel temperature of 220°C to extrude the melt-kneaded product through a nozzle having an annular slit of 6 mm in outer diameter and 4 mm in inner diameter into a hollow fiber-form extrudate at a rate of 8.3 g/min. In this instance, air was injected into a hollow part of the fiber at a rate of 4.0 mL/min. through an air supply port provided at a center of the nozzle.

The extruded mixture in a molten state was introduced into a cooling bath of water maintained at 15°C and having a surface 280 mm distant from the nozzle (i.e., an air gap of 280 mm) to be cooled and solidified (at a residence time in the cooling bath of ca. 6 sec.), pulled up at a take-up speed of 4.8 m/min. and wound up about a reel of ca. 1 m in diameter to obtain a first intermediate form.

Then, the first intermediate form was immersed under vibration in dichloromethane at room temperature for 30 min., followed by immersion in fresh dichloromethane again under the same conditions to extract the plasticizer and solvent and further by 1 hour of heating in an oven at 120°C for removal of the dichloromethane and heat treatment, thereby to obtain a second intermediate form.

Then, the second intermediate form was longitudinally stretched at a ratio of 1.1 times by passing it by a first roller at a speed of 20.0 m/min., through a water bath at 60°C and by a second roller at a speed of 22.0 m/min. Then, the intermediate form was caused to pass through a bath of warm water controlled at 90°C and through a dry heating bath (of 2.0 m in length) controlled at a spatial temperature of 140°C to effect a heat treatment, and then taken up to provide a polyvinylidene fluoride-based hollow-fiber porous membrane (a third form) according to the process of the present invention.

The resultant polyvinylidene fluoride-based hollow-fiber porous membrane exhibited an outer diameter of 1.37 mm, an inner diameter of 0.88 mm, a membrane thickness of 0.25 mm, a porosity of 57.0 %, pure water permeabilities F (L, 100 kPa) at a pressure difference of 100 kPa including F (L = 200 mm, 100 kPa) = 13.5 m/day at a test length L = 200 mm and F (L = 200 mm, v = 70 %) = 16.6 m/day as a value normalized at a porosity of 70 %, an average pore size Pm = 0.052 $\mu$m, a ratio of pure water permeation flux F (L = 200 mm, v = 70 %)/$Pm^4$ =22.7$\times 10^5$ (m/day $\cdot$ $\mu m^4$), a tensile strength of 8.0 MPa, a tensile tenacity of 9.2N, a tensile elongation at break of 20.9 %, an outer surface pore size of 0.154$\mu$m and an inner surface pore size of 0.746$\mu$m (giving an inner/outer surface pore size ratio of 4.9). Further, the thus-obtained hollow-fiber membrane was a gradient-network-texture membrane having pore sizes continuously increasing from the outer surface to the inner surface.

The production conditions and physical properties of the thus-obtained polyvinylidene fluoride-based hollow-fiber porous membrane are inclusively shown in Table 1 appearing hereinafter together with the results of the following Examples, and the results of Comparative Examples described below are inclusively shown in Table 2 appearing hereinafter.

(Example 2)

A hollow-fiber porous membrane was prepared in the same manner as in Example 1 except for supplying the adipic acid-based polyester plasticizer (made by Asahi Denka Kogyo K.K. "PN-150") as an aliphatic polyester and N-methyl-pyrrolidone (NMP) at a mixing ratio of 65.0 wt.%/35.0 wt.%, supplying the plasticizer-solvent mixture/ PVDF mixture at a ratio of 202/100 (by weight), changing the stretching ratio to 1.2 times, and changing the relaxation rates to 1% under wet-heating at 90°C and 1% under dry heating at 140°C. The thus-obtained hollow-fiber membrane was a gradient-network-texture membrane having pore sizes continuously increasing from the outer surface to the inner surface, and exhibited an outer surface pore size of 0.156$\mu$m and an inner surface pore size of 0.724$\mu$m (giving an inner/outer surface pore size ratio of 4.6).

(Example 3)

A hollow-fiber porous membrane was prepared in the same manner as in Example 1 except for using a PVDF mixture obtained by blending 70 wt % of medium-to-high molecular-weight vinylidene fluoride resin (PVDF) (powder) Mw= 4.12 x $10^5$ and 30 wt. % of ultra-high molecular weight vinylidene fluoride resin (PVDF) (powder) having Mw = 9.36 $\times 10^5$, supplying the adipic acid-based polyester plasticizer (made by Asahi Denka Kogyo K.K. "PN-150") as an aliphatic polyester and N-methyl-pyrrolidone (NMP) at a mixing ratio of 69.7 wt.%/30.3 wt.%, supplying the plasticizer-solvent mixture/ PVDF mixture at a ratio of 233/100 (by weight), changing the stretching ratio to 1.2 times, and changing the relaxation rates to 1% under wet-heating at 90°C and 1% under dry heating at 140°C. The thus-obtained hollow-fiber membrane was a gradient-network-texture membrane having pore sizes continuously increasing from the outer surface to the inner surface.

(Example 4)

A hollow-fiber porous membrane was prepared in the same manner as in Example 1 except for using a PVDF mixture obtained by blending 40 wt % of medium-to-high molecular-weight vinylidene fluoride resin (PVDF) (powder) Mw= 4.12 x $10^5$ and 60 wt. % of ultra-high molecular weight vinylidene fluoride resin (PVDF) (powder) having Mw = 9.36 $\times 10^5$, supplying the adipic acid-based polyester plasticizer (made by Asahi Denka Kogyo K.K. "PN-150") as an aliphatic polyester and N-methyl-pyrrolidone (NMP) at a mixing ratio of 69.7 wt.%/30.3 wt.%, supplying the plasticizer-solvent mixture/ PVDF mixture at a ratio of 233/100 (by weight), changing the stretching ratio to 1.4 times, and changing the relaxation rates to 2% under wet-heating at 90°C and 2% under dry heating at 140 °C. The thus-obtained hollow-fiber membrane was a gradient-network-texture membrane having pore sizes continuously increasing from the outer surface to the inner surface.

(Example 5)

A hollow-fiber porous membrane was prepared in the same manner as in Example 4 except for supplying the adipic acid-based polyester plasticizer (made by Asahi Denka Kogyo K.K. "PN-150") as an aliphatic polyester and N-methyl-pyrrolidone (NMP) at a mixing ratio of 66.7 wt.%/33.3 wt.%, and supplying the plasticizer-solvent mixture/PVDF mixture at a ratio of 240/100 (by weight). The thus-obtained hollow-fiber membrane was a gradient-network-texture membrane having pore sizes continuously increasing from the outer surface to the inner surface.

(Example 6)

A hollow-fiber porous membrane was prepared in the same manner as in Example 3 except for supplying the adipic acid-based polyester plasticizer (made by Asahi Denka Kogyo K.K. "PN-150") as an aliphatic polyester and N-methyl-pyrrolidone (NMP) at a mixing ratio of 61.3 wt.%/38.7 wt.%, and supplying the plasticizer-solvent mixture/PVDF mixture at a ratio of 209/100 (by weight) to change the solvent/Mixture A ratio to 80.9 wt%. The thus-obtained hollow-fiber membrane was a gradient-network-texture membrane having pore sizes continuously increasing from the outer surface to the inner surface.

(Example 7)

A hollow-fiber porous membrane was prepared in the same manner as in Example 2 except for using a PVDF mixture obtained by blending 85 wt % of medium-to-high molecular-weight vinylidene fluoride resin (PVDF) (powder) $Mw = 4.12 \times 10^5$ and 15 wt. % of ultra-high molecular weight vinylidene fluoride resin (PVDF) (powder) having $Mw = 9.36 \times 10^5$. The thus-obtained hollow-fiber membrane was a gradient-network-texture membrane having pore sizes continuously increasing from the outer surface to the inner surface.

(Example 8)

A hollow-fiber porous membrane was prepared in the same manner as in Example 7 except for changing the stretching ratio to 1.6 times. The thus-obtained hollow-fiber membrane was a gradient-network-texture membrane having pore sizes continuously increasing from the outer surface to the inner surface.

(Comparative Example 1)

A hollow-fiber porous membrane was prepared in the same manner as in Example 1 except for using Mixture A obtained by blending 95 wt % of medium-to-high molecular-weight vinylidene fluoride resin (PVDF) (powder) $Mw = 4.12 \times 10^5$ and 5 wt. % of ultra-high molecular weight vinylidene fluoride resin (PVDF) (powder) having $Mw = 9.36 \times 10^5$, supplying the adipic acid-based polyester plasticizer (made by Asahi Denka Kogyo K.K. "PN-150") as an aliphatic polyester and N-methyl-pyrrolidone (NMP) at a mixing ratio of 72.5 wt.%/27.5 wt.%, supplying Mixture A/ Mixture B at a ratio of 35.7wt.%/64.3wt.% (by weight), changing the cooling bath temperature to 50 °C, changing the stretching ratio to 2.0 times, and changing the relaxation rates to 10% under wet-heating at 90°C and 4% under dry heating at 140°C.

(Comparative Example 2)

A hollow-fiber porous membrane was prepared in the same manner as in Comparative Example 1 except for supplying the adipic acid-based polyester plasticizer (made by Asahi Denka Kogyo K.K. "PN-150") as an aliphatic polyester and N-methyl-pyrrolidone (NMP) at a mixing ratio of 82.5 wt.%/ 17.5 wt.%, and changing the cooling bath temperature to 40 °C, the take-up speed to 11.0 m/min., the stretching ratio to 1.85 times, and the relaxation rates to 8% under wet-heating at 90°C and 4% under dry heating at 140°C.

(Comparative Example 3)

A hollow-fiber porous membrane was prepared in the same manner as in Comparative Example 2 except for changing the cooling bath temperature to 15 °C, the stretching ratio to 1.2 times, and the relaxation rates to 1% under wet-heating at 90°C and 1% under dry heating at 140°C.

(Comparative Example 4)

A hollow-fiber porous membrane was prepared in the same manner as in Comparative Example 1 except for changing the cooling bath temperature to 8 °C, the stretching ratio to 1.2 times, and the relaxation rates to 1% under wet-heating at 90°C and 1% under dry heating at 140°C.

(Comparative Example 5)

A hollow-fiber porous membrane was prepared in the same manner as in Comparative Example 1 except for supplying the adipic acid-based polyester plasticizer (made by Asahi Denka Kogyo K.K. "PN-150") as an aliphatic polyester and N-methyl-pyrrolidone (NMP) at a mixing ratio of 65.0 wt.%/35.0 wt.%, and changing the cooling bath temperature to 15 °C, the stretching ratio to 1.2 times, and the relaxation rates to 1% under wet-heating at 90°C and 1% under dry heating at 140°C.

(Comparative Example 6)

A hollow-fiber porous membrane was prepared in the same manner as in Comparative Example 1 except for supplying the adipic acid-based polyester plasticizer (made by Asahi Denka Kogyo K.K. "PN-150") as an aliphatic polyester and N-methyl-pyrrolidone (NMP) at a mixing ratio of 60.0 wt.%/40.0 wt.%, and changing the cooling bath temperature to 15 °C, the stretching ratio to 1.3 times, and the relaxation rates to 2% under wet-heating at 90°C and 1% under dry heating at 140°C.

(Comparative Example 7)

The preparation of a hollow-fiber porous membrane was tried in the same manner as in Comparative Example 1 except for supplying the adipic acid-based polyester plasticizer (made by Asahi Denka Kogyo K.K. "PN-150") as an aliphatic polyester and N-methyl-pyrrolidone (NMP) at a mixing ratio of 55.0 wt.%/45.0 wt.%, and changing the cooling bath temperature to 15 °C, whereas during the test, the hollow-fiber film collapsed in the cooling bath, thus failing to provide a product hollow-fiber porous membrane.

(Comparative Example 8)

The preparation of a hollow-fiber porous membrane was tried in the same manner as in Example 1 except for supplying the adipic acid-based polyester plasticizer (made by Asahi Denka Kogyo K.K. "PN-150") as an aliphatic polyester and N-methyl-pyrrolidone (NMP) at a mixing ratio of 66.0 wt.%/34.0 wt.%, i.e. at a slightly higher NMP ratio, and using an almost identical Mixture A/Mixture B ratio of 30.0/70.0 (wt.%), whereas during the test, the hollow-fiber film collapsed in the cooling bath, thus failing to provide a product hollow-fiber porous membrane.

(Comparative Example 9)

The preparation of a hollow-fiber porous membrane was tried in the same manner as in Comparative Example 3 except for using a blend of 40 wt % of medium-to-high molecular-weight vinylidene fluoride resin (PVDF) (powder) Mw= $4.12 \times 10^5$ and 60 wt. % of ultra-high molecular weight vinylidene fluoride resin (PVDF) (powder) having Mw = $9.36 \times 10^5$, and lowering the take-up speed to 4.8 m/min., whereas even at the lowered take-up speed, melt fracture (irregular flow due to excessively large viscosity) was caused to fail in providing a product hollow-fiber porous membrane.

(Comparative Example 10)

A hollow-fiber porous membrane was prepared in the same manner as in Example 1 except for using vinylidene fluoride resin (PVDF) (powder) having Mw = $9.36 \times 10^5$ alone.

(Comparative Example 11)

A principal polyvinylidene fluoride (PVDF) (powder) having a weight-average molecular weight (Mw) of $2.52 \times 10^5$ and an ultra-high molecular weight polyvinylidene fluoride (PVDF) (powder) having Mw = $6.59 \times 10^5$ were blended in proportions of 87.5 wt. % and 12.5 wt. %, respectively, by a Henschel mixer to obtain a mixture A having Mw = $3.03 \times 105$.

An adipic acid-based polyester plasticizer ("PN-150", made by Asahi Denka Kogyo K.K.) as an aliphatic polyester and N-methylpyrrolidone (NMP) as a solvent were mixed under stirring in a ratio of 87.5 wt. %/ 12.5 wt. % at room temperature to obtain a mixture B.

An equi-directional rotation and engagement-type twin-screw extruder ("BT-30", made by Plastic Kogaku Kenkyusyo K.K.; screw diameter: 30 mm, L/ D = 48) was used, and the mixture A was supplied from a powder supply port at a position of 80 mm from the upstream end of the cylinder and the mixture B heated to 100 °C was supplied from a liquid supply port at a position of 480 mm from the upstream end of the cylinder at a ratio of mixture A/mixture B = 37.5/62.5 (wt. %), followed by kneading at a barrel temperature of 210 °C to extrude the melt-kneaded product through a nozzle having an annular slit of 7 mm in outer diameter and 3.5 mm in inner diameter into a hollow fiber-form extrudate at a rate of 13 g/min.

The extruded mixture in a molten state was introduced into a water bath maintained at 60 °C and having a surface 10 mm distant from the nozzle (i.e., an air gap of 10 mm) to be cooled and solidified (at a residence time in water bath of ca. 10 sec.), pulled up at a take-up speed of 5 m/min. and wound up to obtain a first intermediate form.

Then, the first intermediate form was fixed so as not to shrink in the longitudinal direction and, while being kept in the fixed state, was immersed under vibration in dichloromethane at room temperature for 30 min, followed by immersion in fresh dichloromethane again under the same conditions to extract the aliphatic polyester and solvent and further by 1 hour of heating in an oven at 120 °C, while being continually fixed, for removal of the dichloromethane and heat treatment, thereby to obtain a second intermediate form.

Then, the second intermediate form was longitudinally stretched at a ratio of 1.6 times at an environmental temperature of 25 °C and then heated for 1 hour in an oven at a temperature of 100 °C for heat setting to obtain a polyvinylidene fluoride-based porous hollow fiber.

Then, the-thus obtained porous hollow fiber was fixed so as not to shrink in the longitudinal direction and, while being kept in the fixed state, and was immersed in ethanol for 15 minutes and then in water for 15 minutes to be hydrophilized, followed by immersion in 20 %-caustic soda aqueous solution (pH 14) maintained at 70 °C for 1hour, washing with water and drying for 1hour in a warm air oven maintained at 60 °C.

(Comparative Example 12)

A principal polyvinylidene fluoride (PVDF) (powder) having a weight-average molecular weight (Mw) of $2.52 \times 10^5$ and a crystallinity-modifier polyvinylidene fluoride (PVDF) (powder) having Mw = $6.91 \times 10^5$ were blended in proportions of 75 wt. % and 25 wt. %, respectively, by a Henschel mixer to obtain a mixture A having Mw = $3.67 \times 10^5$.

An adipic acid-based polyester plasticizer ("PN-150", made by Asahi Denka Kogyo K.K.) as an aliphatic polyester and N-methylpyrrolidone (NMP) as a solvent were mixed under stirring in a ratio of 87.5 wt. %/ 12.5 wt. % at room temperature to obtain a mixture B.

An equi-directional rotation and engagement-type twin-screw extruder ("BT-30", made by Plastic Kogaku Kenkyusyo K.K.; screw diameter: 30 mm, L/D = 48) was used, and the mixture A was supplied from a powder supply port at a position of 80 mm from the upstream end of the cylinder and the mixture B heated to 100 °C was supplied from a liquid supply port at a position of 480 mm from the upstream end of the cylinder at a ratio of mixture A/mixture B = 40/60 (wt. %), followed by kneading at a barrel temperature of 220 °C to extrude the melt-kneaded product through a nozzle having an annular slit of 7 mm in outer diameter and 5 mm in inner diameter into a hollow fiber-form extrudate at a rate of 9.8 g/min. In this instance, air was injected into a hollow part of the fiber at a rate of 6.2 ml/min. through an air supply port provided at a center of the nozzle.

The extruded mixture in a molten state was introduced into a water bath maintained at 60 °C and having a surface 30 mm distant from the nozzle (i.e., an air gap of 30 mm) to be cooled and solidified (at a residence time in water bath of ca. 10 sec.), pulled up at a take-up speed of 5 m/min. and wound up to obtain a first intermediate form. The first intermediate form had an inner diameter of 1.462 mm and an outer diameter of 2.051 mm.

Then, the first intermediate form was fixed so as not to shrink in the longitudinal direction and, while being kept in the fixed state, was immersed under vibration in dichloromethane at room temperature for 30 min, followed by immersion in fresh dichloromethane again under the same conditions to extract the aliphatic polyester and solvent and further by 1 hour of heating in an oven at 120 °C, while being continually fixed, for removal of the dichloromethane and heat treatment, thereby to obtain a second intermediate form.

Then, the second intermediate form was longitudinally stretched at a ratio of 1.8 times at an environmental temperature of 25 °C and then, while being kept fixed so as not to shrink in the longitudinal direction, was immersed under vibration in dichloromethane at room temperature for 30 min., followed by immersion in fresh dichloromethane under the same conditions and further by 1 hour of heating in an oven at a temperature of 150 °C for removal of dichloromethane and heat setting to obtain a polyvinylidene fluoride-based porous hollow fiber.

(Comparative Example 13)

A porous hollow fiber was obtained in the same manner as in Comparative Example 12 except for using a mixture A obtained by changing the principal PVDF to a PVDF (powder) of Mw = $4.12 \times 10^5$, the modifier PVDF to a PVDF (powder) of Mw = $9.36 \times 10^5$ and the mixing ratio of the principal PVDF and the modifier PVDF to 95/ 5 (wt.%), using a mixture B obtained by changing the mixing ratio of the plasticizer and the good solvent to 82.5/ 17.5 (wt.%), and changing the supply ratio of the mixture A and the mixture B to 35.7/64.3 (wt.%), the air gap to 150 mm and the stretching ratio to 1.7 times.

The production conditions and the physical properties of the resultant hollow-fiber porous membranes of the above-described Examples and Comparative Examples, are inclusively shown in the following Tables 1 and 2, respectively.

[Table 1]

| | | Example | 1 | 2 | 3 | 4 | 5 | 6 | 7 | 8 |
|---|---|---|---|---|---|---|---|---|---|---|
| Starting material composition | Mixture A | Medium-to-high PVDF's Mw (x105) | 4.12 | 4.12 | 4.12 | 4.12 | 4.12 | 4.12 | 4.12 | 4.12 |
| | | Ultra- high PVDF's Mw (x105) | 9.36 | 9.36 | 9.36 | 9.36 | 9.36 | 9.36 | 9.36 | 9.36 |
| | | Medium-to-high/ Ultra-high Mix ratio (wt. %) | 75/25 | 75/25 | 70/30 | 40/60 | 40/60 | 70/30 | 85/15 | 85/15 |
| | | Mw (x105) of Mixture A | 5.43 | 5.43 | 5.69 | 7.26 | 7.26 | 5.69 | 4.91 | 4.91 |
| | Mixture B | Polyester plasticizer | PN150 | PN150 | PN150 | PN150 | PN150 | PN150 | PN150 | PN150 |
| | | Solvent | NMP | NMP | NMP | NMP | NMP | NMP | NMP | NMP |
| | | Plasticizer /Solvent Mix ratio (wt. %) | 68.6/31.4 | 65.0/35.0 | 69.7/30.3 | 69.7/30.3 | 66.7/33.3 | 61.3/38.7 | 65.0/35.0 | 65.0/35.0 |
| | | Mixture B / Mixture A supply ratio (by weight) | 225/100 | 202/100 | 233/100 | 233/100 | 240/100 | 209/100 | 202/100 | 202/100 |
| | | Solvent / Mixture A (wt. %) | 70.5 | 70.7 | 70.7 | 70.7 | 81.2 | 80.9 | 70.7 | 70.7 |

(continued)

| | Example | 1 | 2 | 3 | 4 | 5 | 6 | 7 | 8 |
|---|---|---|---|---|---|---|---|---|---|
| Production conditions | Water bath temp. (°C) | 15 | 15 | 15 | 15 | 15 | 15 | 15 | 15 |
| | Take-up speed (m/min) | 4.8 | 4.8 | 4.8 | 4.8 | 4.8 | 4.8 | 4.8 | 4.8 |
| | Stretch temp. (°C) | 60 | 60 | 60 | 60 | 60 | 60 | 60 | 60 |
| | Stretch ratio | 1.1 | 1.2 | 1.2 | 1.4 | 1.4 | 1.2 | 1.2 | 1.6 |
| | First step : Relaxation conditions | Wet: 90 °C | Wet: 90 °C | Wet: 90 °C | Wet: 90 °C | Wet: 90 °C | Wet: 90 °C | Wet: 90 °C | Wet: 90 °C |
| | Relaxation rate (%) | 0 | 1 | 1 | 2 | 2 | 1 | 1 | 1 |
| | Second step : Relaxation conditions | Dry: 140 °C | Dry: 140 °C | Dry: 140 °C | Dry: 140 °C | Dry: 140 °C | Dry: 140 °C | Dry: 140 °C | Dry: 140 °C |
| | Relaxation rate (%) | 0 | 1 | 1 | 2 | 2 | 1 | 1 | 1 |

(continued)

| Example | | 1 | 2 | 3 | 4 | 5 | 6 | 7 | 8 |
|---|---|---|---|---|---|---|---|---|---|
| Physical properties | Outer diameter (mm) | 1.37 | 1.37 | 1.38 | 1.39 | 1.39 | 1.34 | 1.37 | 1.37 |
| | Inner diameter (mm) | 0.88 | 0.88 | 0.88 | 0.89 | 0.88 | 0.87 | 0.86 | 0.86 |
| | Thickness (mm) | 0.246 | 0.268 | 0.274 | 0.266 | 0.273 | 0.26 | 0.25 | 0.26 |
| | Porosity (%) | 57.0 | 56.6 | 62.1 | 63.1 | 64.1 | 51.4 | 59.2 | 67.3 |
| | Average pore size Pm (micrometer) | 0.052 | 0.059 | 0.074 | 0.052 | 0.054 | 0.043 | 0.064 | 0.080 |
| | Maximum pore size Pmax (micrometer) | 0.090 | 0.086 | 0.116 | 0.102 | 0.084 | 0.080 | 0.102 | 0.134 |
| | Pmax/Pm | 1.73 | 1.46 | 1.57 | 1.96 | 1.56 | 1.86 | 1.59 | 1.68 |
| | SD ($\mu$m) of pore size distribution | 0.004 | 0.005 | 0.012 | 0.007 | 0.005 | 0.002 | 0.007 | 0.014 |
| | Water permeability F (100kPa, L= 200 mm) (m/day) | 13.5 | 11.7 | 18.5 | 9.7 | 10.3 | 6.4 | 13.9 | 31.4 |
| | Normalized F (L= 200 mm, v= 70%) (m/day) | 16.6 | 14.5 | 20.9 | 10.8 | 11.2 | 8.7 | 16.4 | 32.7 |
| | F (L= 200-mm, v= 70%)/Pm4 (m/day-mu m4) x105 | 22.7 | 12.0 | 7.0 | 14.7 | 13.2 | 25.5 | 9.8 | 8.0 |
| | Crystallization tem. Tc (°C) | 146.4 | 146.9 | 146.7 | 143.7 | 143.2 | 146.6 | 147.1 | 147.1 |

[Table 2]

| | | Example | Comp. 1 | Comp. 2 | Comp. 3 | Comp. 4 | Comp. 5 | Comp. 6 | Comp. 7 | Comp. 8 | Comp. 9 | Comp. 10 | Comp. 11 | Comp. 12 | Comp. 13 |
|---|---|---|---|---|---|---|---|---|---|---|---|---|---|---|---|
| Starting material composition | Mixture A | Medium-to-high PVDF's Mw (x10$^5$) | 4.12 | 4.12 | 4.12 | 4.12 | 4.12 | 4.12 | 4.12 | 4.12 | 4.12 | 6.59 | 2.52 | 2.52 | 4.12 |
| | | (Ultra-) high PVDF's Mw (x105) | 9.36 | 9.36 | 9.36 | 9.36 | 9.36 | 9.36 | 9.36 | 9.36 | 9.36 | - | 6.59 | 6.91 | 9.36 |
| | | Medium-to-high/Ultra-high Mix ratio (wt. %) | 95/5 | 95/5 | 95/5 | 95/5 | 95/5 | 95/5 | 95/5 | 75/25 | 40/60 | 100/0 | 87.5/12.5 | 75/25 | 95/5 |
| | | Mw (x105) of Mixture A | 4.38 | 4.38 | 4.38 | 4.38 | 4.38 | 4.38 | 4.38 | 5.43 | 7.26 | 6.59 | 3.03 | 3.67 | 4.38 |
| | Mixture B | Polyester plasticizer | PN150 | PN150 | PN150 | PN150 | PN150 | PN150 | PN150 | PN150 | PN150 | PN150 | PN150 | PN150 | PN150 |
| | | Solvent | NMP | NMP | NMP | NMP | NMP | NMP | NMP | NMP | NMP | NMP | NMP | NMP | NMP |
| | | Plasticizer /Solvent Mix ratio (wt. %) | 72.5/27.5 | 82.5/17.5 | 82.5/17.5 | 72.5/27.5 | 65.0/35.0 | 60.0/40.0 | 55.0/45.0 | 66.0/34.0 | 82.5/17.5 | 68.6/31.4 | 87.5/12.5 | 87.5/12.5 | 82.5/17.5 |
| | | Mixture B / Mixture A supply ratio (by weight) | 180/100 | 180/100 | 180/100 | 180/100 | 180/100 | 180/100 | 180/100 | 233/100 | 180/100 | 30.8/69.2 | 37.5/62.5 | 40/60 | 35.7/64.3 |
| | | Solvent / mixture A (wt. %) | 49.6 | 31.7 | 31.7 | 49.6 | 63.0 | 72.0 | 81.0 | 79.3 | 31.5 | 70.5 | 20.8 | 18.8 | 31.5 |

EP 2 145 675 A1

19

(continued)

| | Example | Comp. 1 | Comp. 2 | Comp. 3 | Comp. 4 | Comp. 5 | Comp. 6 | Comp. 7 | Comp. 8 | Comp. 9 | Comp. 10 | Comp. 11 | Comp. 12 | Comp. 13 |
|---|---|---|---|---|---|---|---|---|---|---|---|---|---|---|
| Production conditions | Water bath temp. (°C) | 50 | 40 | 15 | 8 | 15 | 15 | 15 | 15 | 15 | 15 | 60 | 60 | 60 |
| | Take-up speed (m/min) | 4.8 | 11.0 | 11.0 | 4.8 | 4.8 | 4.8 | 4.8 | 4.8 | 4.8 | 4.8 | 5 | 5 | 5 |
| | Stretc temp. (°C) | 60 | 60 | 60 | 60 | 60 | 60 | *1 | *1 | *2 | 60 | 25 | 25 | 25 |
| | Stretch ratio | 2.0 | 1.85 | 1.2 | 1.2 | 1.2 | 1.3 | | | | 1.1 | 1.6 | 1.8 | 1.7 |
| | First step : Relaxation conditions | Wet: 90 °C | Wet: 90 °C | Wet: 90 °C | Wet: 90 °C | Wet: 90 °C | Wet: 90 °C | | | | Wet: 90 °C | None | None | None |
| | Relaxation rate (%) | 10 | 8 | 1 | 1 | 1 | 2 | | | | 0 | | | |
| | Second step : Relaxation conditions | Dry: 140 °C | Dry: 140 °C | Dry: 140 °C | Dry: 140 °C | Dry: 140 °C | Dry: 140 °C | | | | Dry: 140 °C | None | None | None |
| | Relaxation rate (%) | 4 | 4 | 1 | 1 | 1 | 1 | | | | 0 | | | |

(continued)

| Example | | Comp. 1 | Comp. 2 | Comp. 3 | Comp. 4 | Comp. 5 | Comp. 6 | Comp. 7 | Comp. 8 | Comp. 9 | Comp. 10 | Comp. 11 | Comp. 12 | Comp. 13 |
|---|---|---|---|---|---|---|---|---|---|---|---|---|---|---|
| Physical properties | Outer diameter (mm) | 1.40 | 1.37 | 1.39 | 1.44 | 1.41 | 1.37 | | | | 1.190 | 1.558 | 1.626 | 1.570 |
| | Inner diameter (mm) | 0.87 | 0.87 | 0.88 | 0.88 | 0.88 | 0.85 | | | | 0.740 | 0.716 | 1.133 | 1.065 |
| | Thickness (mm) | 0.265 | 0.250 | 0.254 | 0.277 | 0.269 | 0.258 | | | | 0.226 | 0.421 | 0.247 | 0.253 |
| | Porosity (%) | 71.0 | 73.0 | 65.0 | 60.9 | 57.8 | 57.3 | | | | 55 | 74 | 75 | 76 |
| | Average pore size Pm (μm) | 0.135 | 0.11 | 0.066 | 0.071 | 0.070 | 0.066 | | | | 0.048 | 0.096 | 0.129 | 0.130 |
| | Maximum pore size Pmax (μm) | 0.240 | 0.190 | 0.145 | 0.118 | 0.108 | 0.128 | | | | 0.151 | 0.184 | 0.275 | 0.278 |
| | Pmax/Pm | 1.78 | 1.73 | 2.20 | 1.66 | 1.54 | 1.94 | | | | 3.15 | 1.91 | 2.13 | 2.14 |
| | SD (μm) of pore size distribution | 0.019 | 0.015 | 0.008 | 0.068 | 0.010 | 0.008 | | | | 0.002 | 0.018 | 0.019 | 0.020 |
| | Water permeability F (100kPa, L=200 mm) (m/day) | 80.0 | 45.0 | 10.4 | 11.1 | 11.5 | 10.1 | | | | 2.6 | 58.8 | 36.3 | 66.9 |
| | Normalized F (L=200mm, v=70%) (m/day) | 78.9 | 43.2 | 11.2 | 12.7 | 13.9 | 12.4 | | | | 3.3 | 55.6 | 34.1 | 61.5 |
| | F (L=200-mm, v=70%)/Pm4 (m/day·μm4) ×105 | 2.4 | 2.9 | 5.9 | 5.0 | 5.8 | 6.5 | | | | 6.2 | 6.4 | 1.2 | 2.2 |
| | Crystallization temp. Tc (°C) *3 | 145.5 | 145.5 | 145.5 | 145.5 | 145.5 | 145.5 | (145.5) | (146.9) | (144.0) | 139.5 | 144.0 | 146.1 | 145.5 |

*1: A hollow-fiberwas not obtained due to collapse of hollow fiber in the water bath.
*2: A hollow-fiber was not obtained due to occurrence of melt fracture.
*3: Measured values about starting resin fro Comparative Examples 7-9, and measured values about a hollow-fiber porous membrane for other Comparative Examples.

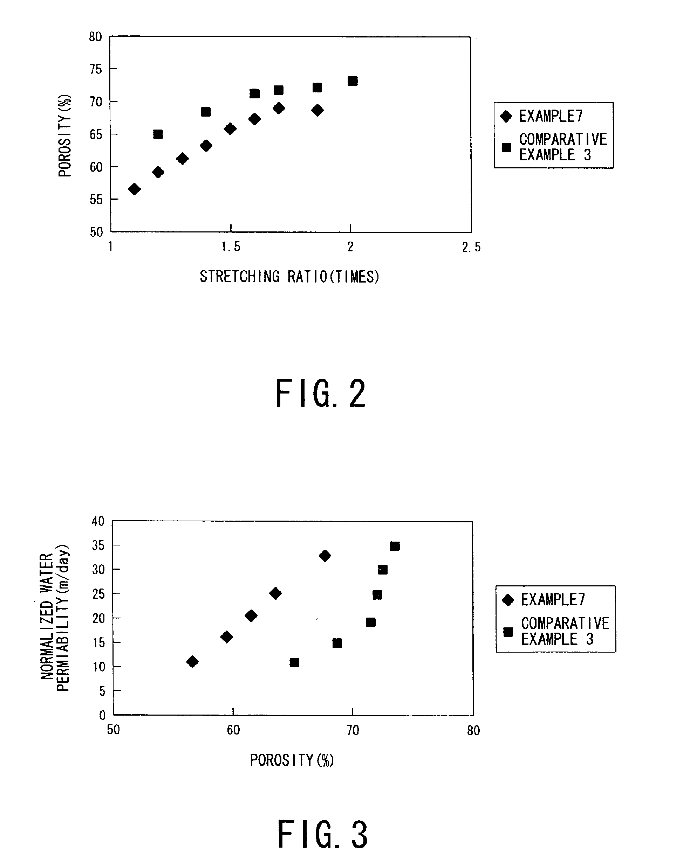

In addition, in the above-mentioned Example 7 and Comparative Example 3, respectively, the stretching ratio was changed in the range of approximately 1.1 to 2.0 times, and corresponding changes of the porosity and the normalized water permeation rate F(L= 200 mm, v= 70%) used as an index of communicativeness of the pores, were observed. Based on the results thereof, the change of the porosity corresponding to the change of stretching ratio is shown in Fig. 2, and the change of normalized water permeation rate corresponding to the change of porosity is shown in Fig. 3. Under the conventional production conditions (Comparative Example 3), the communicativeness of pores was improved as an effect of stretching after the porosity exceeds 70%, whereas under the conditions of the present invention, the normalized water permeation rate was increased linearly from a low porosity level. From this, it is understood that the hollow-fiber porous membrane of the present invention has been improved not only in suppressed increase in dense layer thickness but also in communicativeness of pores even at low stretching ratios. It is suggested that a lager water permeation rate has been realized regardless of a relatively small average pore size as a synergy of these effects.

INDUSTRIAL APPLICABILITY

In view of the results shown in the above-mentioned Tables 1 and 2 and Figs. 2 and 3, the hollow-fiber porous membrane of the present invention obtained by forming a starting composition by adding increased amounts of plasticizer (PN150) and good solvent (NMP) to PVDF mixture A containing an increased proportion of ultra-high molecular weight component, melt-extruding the starting composition and cooling the extrudate in a cooling bath at a temperature lower than before, exhibited a remarkably increased value of $F(L= 200\text{-mm}, v= 70\%)/Pm^4$ (m/day-$\mu$m$^4$) as a performance index representing a high water permeability retained even at a smaller average pore size as a result of thinking much of fine particle-removal effect compared with a hollow-fiber porous membrane obtained by Comparative Example 1 representing Patent document 5 as typical prior art for steps of melt-extrusion to cooling. Further, Comparative Example 4 having adopted a lower cooling bath temperature than Comparative Example 1 suffered from a severe lowering in water permeability. Further, a sufficient increase in the above-mentioned performance index was not attained either in Comparative Example 5 wherein the cooling bath temperature was lowered to 15 °C and the amount of good solvent was increased or in Comparative Example 6 wherein the amount of good solvent was further increased, since these Comparative Examples did not use an increased amount of ultra-high molecular weight component, whereas Comparative Example 7 using a further increased amount of good solvent caused collapse of the melt-extruded hollow fiber film in the cooling bath. Even in a system using an increased amount of ultra-high molecular weight component similarly as Example 1, the collapse of the melt-extruded hollow fiber film in the cooling bath was caused (Comparative Example 8). On the other hand, in a system wherein the amount of the ultra-high molecular weight component was increased in a typical conventional process fro producing hollow-fiber membranes as in Patent document 4, the formation by melt-extrusion of a hollow-fiber film was failed due to melt-fracture even at a lower take-up speed(and accordingly at a lower melt-extrusion rate) (Comparative Example 9). These results are believed to clearly show that the present invention having realized a smaller pore size while retaining a water permeability, represents a really difficult technology.

**Claims**

1. A hollow-fiber porous membrane, comprising a hollow fiber-form porous membrane of vinylidene fluoride resin providing: a ratio F (L = 200 mm, v = 70 %)/Pm$^4$ of at least $7\times10^5$ (m/day $\cdot$ $\mu$m$^4$), wherein the ratio F (L = 200 mm, v = 70 %)/Pm$^4$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water temperature of 25°C and a 4-th order value Pm$^4$ of an average pore size Pm.

2. A hollow-fiber porous membrane according to Claim 1, showing a standard deviation of the pore size distribution by the half-dry/bubble point method of at most 0.015 $\mu$m.

3. A hollow-fiber porous membrane according to Claim 1 or 2, showing a porosity of 50 to 90%.

4. A hollow-fiber porous membrane according to any of Claims 1-3, showing a crystallization temperature Tc of at least 143°C.

5. A hollow-fiber porous membrane according to any of Claims 1-4, which is a gradient-network-texture membrane including a dense layer governing a filtration performance on an outer surface thereof, a sparse layer contributing to reinforcement of the membrane on a inner surface thereof, and pores sizes continuously increasing from the outer surface to the inner surface.

6. A hollow-fiber porous membrane according to any of Claims 1-5, which has an outer-surface average pore size and an inner-surface average pore size giving a ratio in a range of 2.0-10.0.

7. A hollow-fiber porous membrane according to any of Claims 1-6, showing an average pore size Pm of at most 0.08 μm.

8. A hollow-fiber porous membrane according to any of Claims 1-7, wherein the vinylidene fluoride resin is a mixture comprising 90 - 20 wt. % of medium-to-high molecular-weight vinylidene fluoride resin having a weight-average molecular weight of 150,000-600,000 and 10-80 wt.% of ultra-high molecular-weight vinylidene fluoride resin having a weight-average molecular weight which is at most 1,200,000 and at least 1.8 times that of the medium-to-high molecular-weight vinylidene fluoride resin.

9. A process for producing a hollow-fiber porous membrane according to any one of claims 1 - 8, comprising:

   providing a vinylidene fluoride resin mixture comprising 90 - 20 wt. % of medium-to-high molecular-weight vinylidene fluoride resin having a weight-average molecular weight of 150,000-600,000 and 10 - 80 wt.% of ultra- high molecular weight vinylidene fluoride resin having a weight-average molecular weight which is at most 1,200,000 and at least 1.8 times that of the medium-to-high-molecular-weight vinylidene fluoride resin,
   providing a composition by adding, to 100 wt. parts of the vinylidene fluoride resin mixture, a plasticizer and a good solvent for vinylidene fluoride resin in a total amount of 100 - 300 wt. parts including 25 - 45 wt.% thereof of the good solvent,
   melt extruding the composition into a hollow-fiber film,
   introducing the hollow-fiber film into a cooling liquid at -20 - 40 °C to cool and solidify the film, and
   extracting the plasticizer from the hollow-fiber film to recover a hollow-fiber porous membrane.

10. A production process according to Claim 9, wherein the composition contains the good solvent in an amount of 55 to 90% of the vinylidene fluoride resin.

COMPRESSED AIR

PRESS.
GAUGE

PRESSURE ADJUSTER
VALVE

~PRESSURE VESSEL

PURE WATER
(OR FEED WATER)

PROJECTING PORTION
(50mm)

TEST LENGTH L

SAMPLE HOLLOW FIBER

~WATER RECEIVER
VESSEL

FILTRATED WATER

# FIG. 1

FIG. 2

FIG. 3

## INTERNATIONAL SEARCH REPORT

| International application No. |
|---|
| PCT/JP2008/055229 |

A.   CLASSIFICATION OF SUBJECT MATTER
*B01D71/34*(2006.01)i, *B01D69/08*(2006.01)i, *D01F6/12*(2006.01)i

According to International Patent Classification (IPC) or to both national classification and IPC

B.   FIELDS SEARCHED

Minimum documentation searched (classification system followed by classification symbols)
B01D61/00-71/82, C02F1/44, D01F6/12

Documentation searched other than minimum documentation to the extent that such documents are included in the fields searched
  Jitsuyo Shinan Koho          1922-1996     Jitsuyo Shinan Toroku Koho     1996-2008
  Kokai Jitsuyo Shinan Koho     1971-2008     Toroku Jitsuyo Shinan Koho     1994-2008

Electronic data base consulted during the international search (name of data base and, where practicable, search terms used)
  WPI

C.   DOCUMENTS CONSIDERED TO BE RELEVANT

| Category* | Citation of document, with indication, where appropriate, of the relevant passages | Relevant to claim No. |
|---|---|---|
| X | JP 2006-231274 A  (Toray Industries, Inc.), 07 September, 2006 (07.09.06), Particularly, examples (Family: none) | 1,7 |
| X | WO 2005/123233 A1  (Toyobo Co., Ltd.), 29 December, 2005 (29.12.05), Particularly, example 19 & JP 2006-224085 A | 1,7 |
| X | JP 2007-7490 A  (Toray Industries, Inc.), 18 January, 2007 (18.01.07), Particularly, Par. No. [0022]; examples 1 to 5 (Family: none) | 1,7 |

| ☒  Further documents are listed in the continuation of Box C. | ☐  See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 21 May, 2008 (21.05.08) | Date of mailing of the international search report 10 June, 2008 (10.06.08) |
|---|---|
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/055229

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2006-224051 A  (Toray Industries, Inc.), 31 August, 2006 (31.08.06), Particularly, Par. No. [0020]; examples (Family: none) | 1,7 |
| X | WO 2007/010832 A1  (Kureha Corp.), 25 January, 2007 (25.01.07), Full text (Family: none) | 1-10 |
| Y | | 1-10 |
| X | WO 2006/087963 A1  (Kureha Corp.), 24 August, 2006 (24.08.06), Full text (Family: none) | 1-10 |
| Y | | 1-10 |
| X | WO 2005/099879 A1  (Kureha Chemical Industry Co., Ltd.), 27 October, 2005 (27.10.05), Full text (Family: none) | 1-10 |
| Y | | 1-10 |

Form PCT/ISA/210 (continuation of second sheet) (April 2007)

## REFERENCES CITED IN THE DESCRIPTION

**Patent documents cited in the description**

- JP 63296939 A
- WO 02070115 A
- JP 2003210954 A
- WO 2004081109 A
- WO 2007010832 A1
- WO 200503700 A
- WO 2006087963 A
- JP 2007313491 A